Europäisches Patentamt

European Patent Office

Office européen des brevets

(11) Publication number: **0 089 851**
A2

## EUROPEAN PATENT APPLICATION

(21) Application number: 83301580.3

(22) Date of filing: 22.03.83

(51) Int. Cl.³: **B 27 B 17/00**

(30) Priority: 23.03.82 GB 8208393

(43) Date of publication of application:
28.09.83 Bulletin 83/39

(84) Designated Contracting States:
AT BE CH DE FR GB IT LI SE

(71) Applicant: Fenwick, John David Keld
The Mill House
Clare Sudbury Suffolk, C010 8PF(GB)

(72) Inventor: Fenwick, John David Keld
The Mill House
Clare Sudbury Suffolk, C010 8PF(GB)

(74) Representative: Smith, Geoffrey Leonard et al,
Marks & Clerk 57/60 Lincoln's Inn Fields
London WC2A 3LS(GB)

(54) Chain saw and attachment.

(57) In order to enable a chain saw to make accurate cuts and to be adjustable so far as its cutting angle is concerned, a guide bar 2 is secured to a workpiece by pins 43 or by clamps. Attached to the chain saw is a guide means 1 comprising a pair of spaced plates 3 cooperable with the guide bar 2 to enable the saw to be rocked in reltion to the guide bar 2 and workpiece in use. In order to stabilise the saw and react the operating form, a rack 16 on the guide bar 2 may be provided to cooperate with a pawl 17 on the guide means.

FIG.I.

EP 0 089 851 A2

## "CHAIN SAW AND ATTACHMENT"

This invention relates to chain saws.

Chain saws are normally regarded as implements for making comparatively inaccurate cuts in standing or fallen timber. However, there are occasions when the portability of the power source of a chain saw may be put to good use in working away from a workship with normal power tools. For example, there may be a possibility to make fencing posts, rails and planks from timber lying in remote areas.

Proposals have been made to provide guides for chain saws to meet this requirement. For instance in United Kingdom patent specification (G.B.-A) 963425 there is described an arrangement for cutting planks from a lying log by running rollers on a previously cut horizontal face and maintaining the cutting chain at a distance from these rollers to provide a plank of the thickness desired. The first cut is shown as being made by running the rollers on a guide surface provided by a precut plank located by wedges and secured on the log by nails. Such an arrangement is quite complex and therefore expensive in that the rollers must all be mounted in bearings. Also, in operation, each cut depends on the accuracy of the preceding cut so that if woodchips are left on the horizontal surface, or if for any other reason a cut is not accurate, the flatness of all succeeding cuts is lost. Also, the chain must be presented to the wood at a fixed angle if the rollers are to roll without scuffing on the surface.

Another proposal which has been made is shown in United Kingdom patent specification (G.B.-A) 1482556. This consists of an attachment comprising a frame to which the saw is attached at an angle which is fixed for the duration of a cut. The frame is provided with a guide having runners which ride on a guide member. For an initial cut this guide member is mounted on a flat board providing a reference face. For subsequent cuts, the guide member is mounted in the previously cut faces. This equipment is also fairly sophisticated and therefore expensive.

Various forms of guide have been provided for hand held circular saws, but no simple system has been provided for chain saws.

It is an object of the present invention to provide a simple form of guide arrangement for a chain saw, which enables the user to choose the cutting angle and to vary it during a cut under manual control.

According to the present invention there is provided a chain saw having attached thereto a guide means presenting parallel guide faces for guiding the saw along a guide bar attached to a workpiece, the chain saw being rockable to adjust the cutting angle during use while the guide means remains engaged over the guide bar.

The guide means may be provided with a pawl cooperable with a ratchet on the guide bar to provide a variable position point of leverage as the chain saw is moved along the guide bar.

It is preferred that the guide means is adjustably spaced from the chain saw and is clampable in the adjusted position.

The guide bar may be of rectangular, T shape or other suitable configuration, and may be attached to the workpiece by pins or, if damage to the workpiece is to be avoided, by clamps.

A mounting bracket for the guide means may be attached to the cutter bar bolts of the chain saw.

The invention will be further described with reference to the accompanying drawings, in which:

Figure 1 is of a perspective view showing one form of the chain saw with a form of guide means attached thereto and in position on a workpiece and guide bar;

Figure 2 shows an alternative form of guide bar;

Figure 3 shows a form of clamp for a guide bar;

Figure 4 shows in perspective one mode of connection of the guide means to a chain saw;

Figure 5 is an elevation showing adjustable mounting of a guide means on a mounting arm;

Figure 6 is a section on the line VI-VI of Figure 5;

Figure 7 is a side elevation of the guide means of Figure 5;

Figure 8 is a perspective view of a modified form of guide bar for mounting a guide means in the form of a carriage.

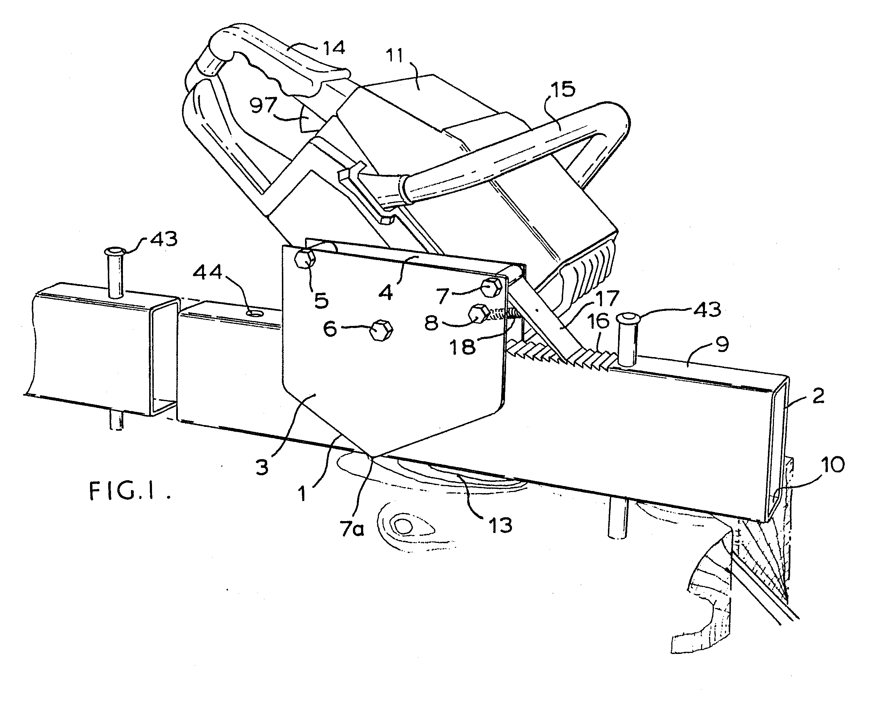

Referring to Figure 1, numeral 1 refers generally to the flange unit or guide means and numeral 2 to the guide bar. The flange unit 1 consists of two flanges 3 and 4 joined together by some joining elements such as nuts and bolts and distance pieces.

The joining elements 5, 6 and 8 are positioned critically to allow the saw to move in an arc of approximately $90^{\circ}$. The joining element 6 is positioned critically with respect to the flange points 7a so that the distance between them is slightly greater than the distance from the top edge 9 of the guide bar 2 to the bottom edge 10. The whole flange unit assembly is located with respect to the chain saw 11 so that the flange points 7a do not project lower than the bottom-most claw of the chain saw. This is so that when the arrangement is being used on flat timber, the weight of the chain saw may be taken by the claw which will, if it projects below the guide bar 2, grip the timber surface 13 and provide leverage for the operator holding the rear 14 and top 15 chain saw handles.

With the arrangement shown in Figure 1 neither the points of the flanges 7 nor the bottom-most claw of the chain saw projects below the bottom edge 10 of the guide bar. Under these conditions the operator has no point of leverage so the guide bar is shown as being provided with a toothed rack 16 on its upper surface 9 and a pawl 17 on the flange unit, which engages in the rack.

The pawl 17 pivots on joining element 7 and may be forced into the teeth of the rack by a spring 18 which operates between joining element 8 and the pawl 17. If use of the pawl is not required, the spring may be unhooked and the pawl flipped back so that it rests on a pin between the two flanges. Use of the spring is not essential since if the rack profile is substantially as shown i.e. on face vertical to the top of the guide bar, the pawl will not slip out of the detents.

The rack may be omitted, and in such a case the leverage would be provided by allowing the bottom claw of the chain saw to project below the guide bar 2 to engage the workpiece.

Use of the version with pawl and rack is envisaged mainly under two circumstances:

a) On making the initial cut on rough timber when, due to irregularities, the claw of the chain saw cannot engage in the surface; and

b) When cutting quality prepared timber and the operator does not wish to put score marks and indentations in the surface of the work with the claw of the chain saw.

Notwithstanding the desirability of using the rack and pawl version on quality prepared timber, it is perfectly possible to use the simple version without marking the surface. This is achieved by placing a protective strip of plywood or other laminate material on the top of the workpiece to protect it from the chain saw claw.

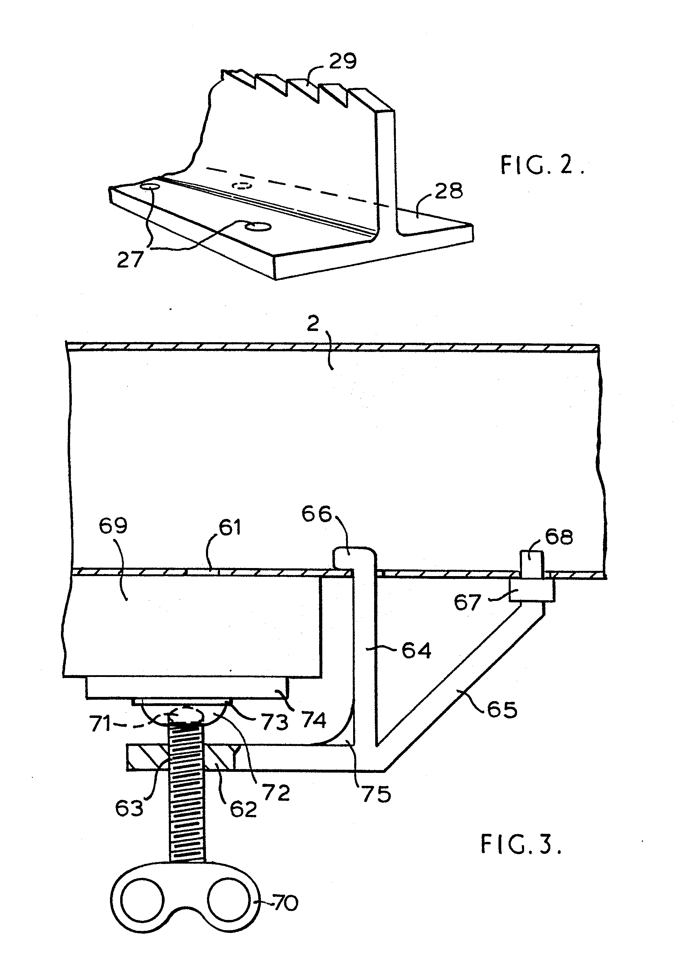

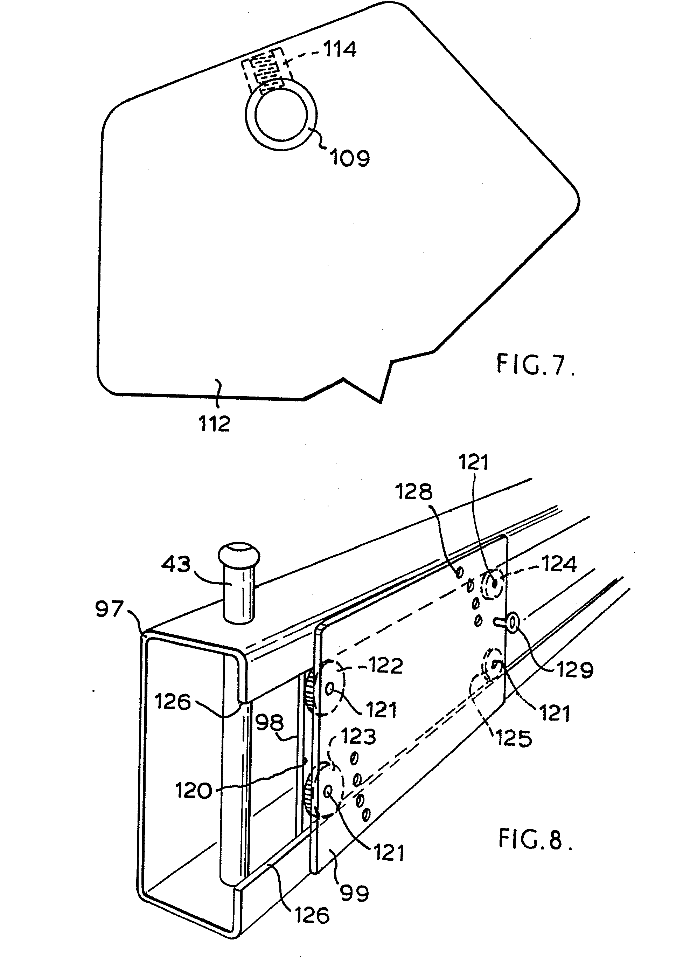

The guide bar 2 shown in Figure 1 is substantially rectangular in section but this is not an essential profile. Figure 2 shows an inverted T section with a rack 29 cut in the vertical arm; with this version of the guide bar, the flanges 3 and 4 of the flange unit 1 would be closed together to provide the correct sliding fit. Figure 8 shows a C section guide bar. Other profiles are possible, i.e. dumbbell, I-section, etc. The essential element is that the guide bar should provide angular guidance and support to the chain saw and its cutter bar.

The guide bar is normally fixed to the work by pins 43 driven through close-fitting holes 44 and into the wood. A minimum of two must be used but on long cuts there should be at least one more in the centre of the guide bar to prevent bending. The pins constrain movement of the guide bar longitudinally, horizontally and angularly. It is perfectly acceptable for the bar to move up and down the shanks of the pins and indeed this will be seen to be necessary for accurate setting of the bar.

In the version illustrated in Figure 1 holes 44 are provided at approximately 300 mm pitch along the length of the bar.

To aid the guide bar at right angles to the face of the work a right-angle jig may be used.

Securing the guide bar to prepared timber without damaging the work with pins may be simply achieved using G-clamps or the purpose-designed clamps illustrated in Figure 3. The latter are to be preferred because G-clamps are liable to interfere with free movement of the flanges along the guide bar. The underside of the guide bar 2 is drilled with holes 61 at a constant pitch.

The clamp consists of an arm 62 having threaded a hole 63 at one end and with two branches at the other, one branch being called the hook branch 64 at right angles and the other being called the reaction branch 65 at an angle. The hook branch has a hook 66 at its extremity while the reaction branch has a collar 67 and locating stud 68 at its extremity. The distance between the centreline of the hook branch and the locating stud is the same as the pitch of the holes 61 drilled in the bottom of the guide bar. The hook is of such a diameter that it can be inserted easily into one of the holes 61 by presenting the clamp at an angle. Once inserted the clamp is rotated so that the stud 68 engages in the adjoining hole. The stud 68 is of such a diameter that it will fit snugly into the hole until the collar 67 butts up against the underside of the guide bar, the collar being larger than the hole.

The clamp is arranged so that the arm 62 passes under the work 69. The screw clamp 70 is then tightened against the underside of the work. The screw clamp is

fitted with a ball 71 and socket 72 so that the face of the clamp 73 can adjust to irregularities in the underside of the work. Packing 74 may be added both to fill out the distance if the reach of the screw is insufficient and to protect the underside of the work. The clamp may be strengthened by a fillet 75 or it may be made in an I-section to resist bending.

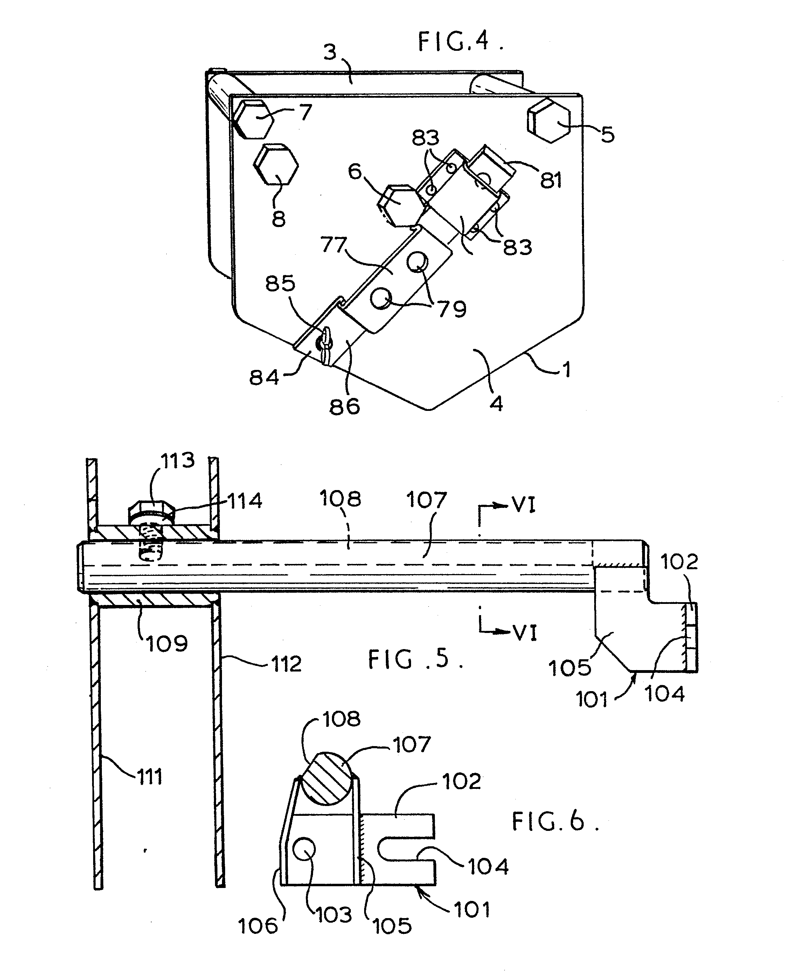

To attach the flange unit 1 to the chain saw cutter bar bolts, a mounting bracket 76 as shown in Figure 4 may be provided. Figure 4 is a perspective view of the flange unit from the opposite side to Figure 1. The mounting bracket 76 is joggled as shown so that the displaced portion 77 can fit into a recess in the chain saw clutch housing. It is drilled with two holes 79 to fit the chain saw cutter bar bolts on the particular model of chain saw to which the device is to be attached. The displaced portion 77 is displaced sufficiently to accommodate the depth of the chain saw cutter bar bolts.

The long arm of the bracket 81 slides into a pocket 82 on the inner flange 4 of the flange unit. This pocket is either welded to flange 4 or secured with countersunk rivets, the heads being on the inside of flange 4 and countersunk so that they do not impede sliding of the flange unit on the guide bar. It is probable that the pocket could be formed by stamping since the long arm of bracket 81 would act on both sides of the recess so formed.

The short arm 84 of the bracket is drilled near the end and fixed to flange 4 by a countersunk set screw and wing nut 85. The setscrew head is on the inside of flange 4 and countersunk so that it does not impede sliding of the flange unit on the guide bar. The wing nut is locked by a lock washer or similar device.

The mounting bracket design is varied to accommodate the different models of chain saw to which the attachment is to be fitted. Its arms, however, will be standard to fit the relatively few models of the invention. It is intended to remain fixed to the chain saw while cross-cutting, felling, lopping or carrying out other operations for which the invention is not required.

Turning now to Figures 5 to 7, these show a modified form of mounting for the guide means, as well as some modifications to the guide means itself.

Figures 5 and 6 show a mounting bracket 101 comprising a mounting plate 102 with a hole 103 and a slot 104 to enable it to be fitted to the guide bar bolts of chain saws of a variety of models. First and second support plates 105 and 106 are welded to the plate 102 and support the end of mounting rod 107 welded to both plates.

The rod 107 has a flat 108 extending along most of its length and is received in a sleeve 109 extending between and welded to two plates 111 and 112 forming the signal reference of the guide means. The guide means is slidable along the rod 107 for adjustment of the position of the chain saw relating to the guide bar and is located in position by means of a locking screw 113 passing through a threaded boss 114 on the sleeve 109 and engaging at the flat 108.

This arrangement enables more than one cut to be made if desired without moving the guide bar. The chain saw has a fixed orientation relating to the rod 107 and guide means but the guide means itself may rock about the sleeve 109 as fulcrum on the guide bar.

A further variation of the invention uses a carriage to hold the saw and a winch to pull it into the work. Figure 8 shows one design of carriage in which the guide bar 97 is basically a channel or C section.

Many different designs of carriage are possible, one being an arrangement incorporating rollers to reduce friction caused by the reaction of the saw in the cut. Figure 8 shows a possible design in which the guide bar 97 is of C section and the carriage 98 works in the slot between the open jaws of the C. The carriage 98 consists of two plates 99 and 120. The plate 99 works outside the guide bar and the plate 120 working inside. They are joined by four spindles 121 on which rotates rollers 122/3/4/5. These rollers roll on the opposing surfaces 126 of the slot. The carriage plates 99 and 120 are so distanced apart that they fit snugly on each side of the open jaws of the C, thus providing the important guidance element.

The distances between rollers 122 and 123, 124 and 125 are not critical and should give 1 mm slack so that the carriage will roll easily. During cutting all the load will be on rollers 122 and 125. The rollers 123 and 124 are provided merely for ease of handling the carriage. To reduce costs, a further variant with only two rollers of a diameter 2 mm less than the gap of the C is proposed. These would be quite sufficient to support the carriage both loaded and unloaded.

Two series of holes 127 and 128 are provided for attachment to the mounting bracket 76 of Figure 4 and are positioned so that they are coincident with the holes in the long arm 81 and short arm 84. Attachment is by countersunk set screws so that the heads are on the inside of the plate 99 and do not interfere with the smooth motion of the carriage. The holes 127 and 128 are positioned on the opposite sides of the circumference of a circle so that engaging the mounting bracket 76 in different pairs presents the chain saw at different angles to the work. Attachment of the winch is by eye 129.

Various modifications may be made within the scope of the invention.

## CLAIMS

1.    A chain saw characterised by having attached thereto a guide means (1) presenting parallel guide faces (3, 4) for guiding the saw (11) along a guide bar (2) attached to a work piece, the chain saw (11) being rockable to adjust the cutting angle during use while the guide means (1) remains engaged on the guide bar (2).

2.    A chain saw according to claim 1, characterised in that the guide means (1) comprises a pair of spaced parallel plates (3, 4), of which the opposed used faces constitute the said guide faces.

3.    A chain saw according to claim 1 or 2, characterised in that the guide means (1) is provided with a pawl (17) cooperable with a ratchet (16) on the guide bar (2) to provide a variable position point of leverage as the chain saw (11) is moved along the guide bar (2).

4.    A chain saw according to any of the preceding claims characterised in that the guide means (1) is adjustably spaced from the chain saw (11) and means (113) is provided for clamping the guide means in a chosen position.

5.    A chain saw according to any of the preceding claims, characterised in that the guide bar (2) is rectangular in cross section.

6.    A chain saw according to any of claims 1 to 4, characterised in that the guide means (98) is engageable with a guide bar (97) presenting a slot which forms a track (126) along which the guide means (98) and saw can be drawn, e.g. by means of a winch.

7.    A chain saw according to any of claims 1 to 6, characterised in that the guide bar (2) is secured to the work piece by clamps.

8.    A chain saw according to claim 7, characterised in that a removable clamp comprises an arm (62) having a threaded hole (63) at one end receiving a screw clamp pad (74), the other end of the arm being bifurcated (64, 65) so as to engage in two holes in the guide bar, one hole being engaged by a hook end (66) and the other by a stud (67) so that when the clamp is tightened the hook end (66) is tensioned and the stud end (67) is compressed.

9.    A chain saw according to any of claim 1 to 5, characterised in that the guide means (1) is attached to the chain  saw (11) by means of a mounting bracket (77).

10. A chain saw according to claim 9, characterised in that the mounting bracket (77) is secured to cutter bar bolts of the chain saw (11).

FIG.1.

0089851

FIG. 2.

FIG. 3.

FIG.4.

FIG.5.

FIG.6.

FIG.7.

FIG.8.